# EUROPÄISCHE PATENTANMELDUNG

(11) **EP 1 138 593 A1**
(43) Veröffentlichungstag der Anmeldung: **04.10.2001**
(21) Anmeldenummer: 01105839.3
(22) Anmeldetag: 09.03.2001
(51) Int. Cl.: B64D 47/04, F21S 8/10

(54) **Scheinwerfer für Flugzeuge**

(30) Priorität: 31.03.2000 DE 10016217
(71) Anmelder: Hella KG Hueck & Co., 59552 Lippstadt (DE)
(72) Erfinder: Koniczek, Norbert, 59555 Lippstadt (DE); Metzger, Peter, 33175 Bad Lippspringe (DE); Ganzer, Bernd, 59597 Erwitte (DE)

(57) **Zusammenfassung**

Scheinwerfer für ein Flugzeug, mit einer einem Gehäuse (2) vorgelagerten Abschlussscheibe (8), mit einer einem Reflektor (3,4,5) zugeordneten Gasentladungslampe (6) und einem elektronischen Versorgungsgerät (7), wobei das Gehäuse mindestens zwei Reflektoren aufweist, die zueinander unterschiedlich ausgerichtet sind und sich überlappende Lichtkegel erzeugen.

## Beschreibung

Die Erfindung betrifft einen Scheinwerfer für ein Flugzeug, mit einer einem Gehäuse vorgelagerten Abschlussscheibe, mit einer einem Reflektor zugeordneten Gasentladungslampe und einem elektronischen Versorgungsgerät.

Aus der US 5 813 744 ist ein Scheinwerfer für Flugzeuge bekannt, der als Lande- bzw. Bodenscheinwerfer ausgebildet ist. Der bekannte Scheinwerfer besteht im Wesentlichen aus einem Gehäuse, in dem ein Reflektor mit einer zugeordneten Gasentladungslampe angeordnet ist. Der Reflektor wird von einer transparenten Abdeckscheibe abgedeckt. In Abstrahlrichtung ist dem Gehäuse bzw. dem Reflektor eine Abschlussscheibe vorgelagert. Die von den Flugzeug-Zulassungsbehörden geforderten Ausleuchtungswinkel zur Ausleuchtung des Vorfeldes beim Starten und Landen des Flugzeuges werden durch eine optische Wirkung der Abschlussscheibe erzielt, die das von dem Reflektor parallel abgestrahlte Licht durch Aufteilung der Abschlussscheibe in unterschiedliche Regionen mit unterschiedlicher Lichtbrechung mit unterschiedlichen Winkeln abstrahlt.

Nachteilig bei dem bekannten Scheinwerfer ist, dass zur Erzielung einer bestimmten Beleuchtungsstärke eine relativ hohe Leistungsaufnahme notwendig ist, die infolge einer relativ hohen Verlustleistung zu einer Erwärmung führt, die die Lebensdauer der Gasentladungslampe verringert.

Aufgabe der vorliegenden Erfindung ist es, bei verbesserter Ausleuchtung der Landebahn beim Starten und Landen des Flugzeuges, die Lebensdauer der Gasentladungslampe zu erhöhen.

Diese Aufgabe wird erfindungsgemäß in Verbindung mit dem Oberbegriff des Anspruches 1 dadurch gelöst, dass das Gehäuse mindestens zwei Reflektoren aufweist, die zueinander unterschiedlich ausgerichtet sind und sich überlappende Lichtkegel erzeugen.

Durch die Verwendung von mindestens zwei Reflektoren mit entsprechend zwei zugeordneten Gasentladungslampen wird, bei verringerter Leistung der einzelnen Gasentladungslampen und damit verbundener verminderter Verlustleistung mit entsprechend verminderter Wärmeentwicklung, eine verbesserte Ausleuchtung des Vorfeldes und eine erhöhte Lebensdauer der Gasentladungslampen erzielt. Durch die Redundanz der sich überlappenden Lichtkegel kann selbst bei Ausfall einer Gasentladungslampe noch Licht zur Verfügung gestellt werden.

Gemäß einer bevorzugten Ausführungsform der Erfindung weist das Gehäuse drei Reflektoren auf, die sich überlappende Lichtkegel erzeugen.

Durch die Verwendung von drei Reflektoren wird insgesamt eine stärkere Bündelung des abgestrahlten Lichtes gegenüber dem Stand der Technik erzielt. Die bessere bzw. stärkere Bündelung hat weniger Streulicht und dadurch eine geringere Blendgefahr der Flug-Crew, insbesondere beim Durchfliegen feuchter Luftschichten, zur Folge. Durch die Verwendung von drei Reflektoren wird zum einen die Lichtleistung und zum anderen die Redundanz und die damit verbundene höhere Betriebssicherheit weiter verbessert.

Nach einer weiteren bevorzugten Ausführungsform der Erfindung sind die drei Reflektoren miteinander verbunden und gemeinsam gegenüber dem Gehäuse über eine Drei-Punkt-Einstellung verstellbar.

Durch die Verbindung der Reflektoren miteinander können diese relativ einfach nach Einbau des Gehäuses in den Flugzeugrumpf verstellt bzw. justiert werden.

Gemäß einer bevorzugten Ausführungsform der Erfindung sind die Reflektoren als separate Einzelreflektoren ausgebildet.

Die Verwendung von separaten Einzelreflektoren ermöglicht eine zusätzliche individuelle Verstellung eines einzelnen Reflektors, um beispielsweise den Besonderheiten eines Flugzeugbaumusters entsprechend die Vorfeldausleuchtung bereits in der Flugerprobungsphase zu optimieren.

Nach einer weiteren bevorzugten Ausführungsform der Erfindung ist den Reflektoren eine lichtstreuende Optik vorgelagert.

Durch die Verwendung einer lichtstreuenden Optik, beispielsweise in der Abdeckscheibe des Reflektors, wird die nötige Streuwirkung erzeugt.

Gemäß einer weiteren bevorzugten Ausführungsform der Erfindung sind die Reflektoren einstückig ineinander übergehend zu einer Reflektoreinheit verbunden.

Durch die ineinander übergehenden Reflektoren kann zum einen eine verbesserte Bündelung erzielt und es kann auf eine auf eine lichtstreuende Optik verzichtet werden und zum anderen wird die Montage der Scheinwerfer vereinfacht.

Nach einer weiteren bevorzugten Ausführungsform der Erfindung weist das Versorgungsgerät drei Vorschaltgeräte und einen Transformator zur Versorgung der Gasentlandungslampen auf.

Dadurch, dass den Gasentladungslampen eigene Vorschaltgeräte zugeordnet sind, wird zum einen eine Regelung und Überwachung der einzelnen Gasentladungslampen erleichtert und zum anderen wird auch hier eine die Betriebssicherheit erhöhende Redundanz erzielt.

Weitere Einzelheiten der Erfindung ergeben sich aus der nachfolgenden ausführlichen Beschreibung und den beigefügten Zeichnungen, in den bevorzugte Ausführungsformen der Erfindung beispielsweise veranschaulicht sind.

In den Zeichnungen zeigen:

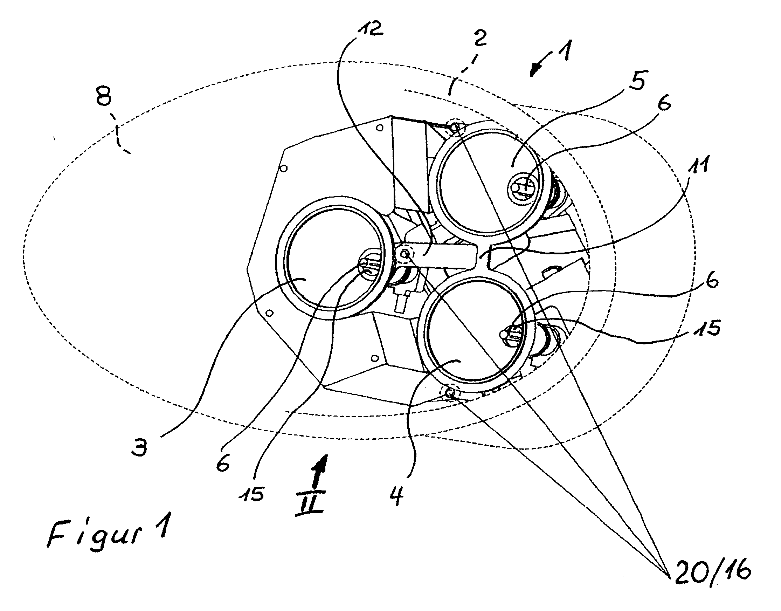

- Figur 1:: Eine räumliche Darstellung eines Scheinwerfers mit drei separaten Reflektoren und einem gestrichelt angedeuteten Gehäuse,

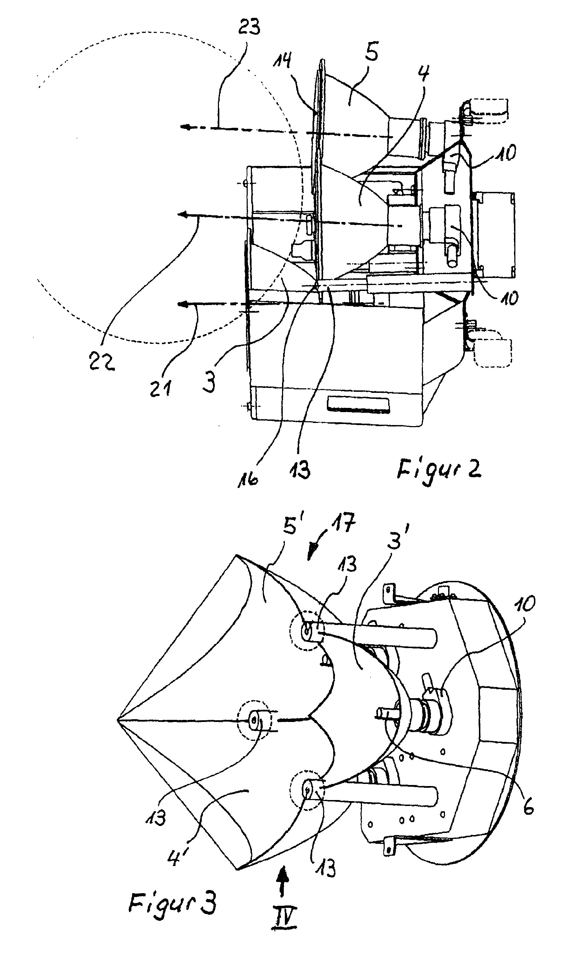

- Figur 2:: eine Seitenansicht des Scheinwerfers von Figur 1 aus Richtung II,
- Figur 3:: eine räumliche Darstellung eines Scheinwerfers mit drei einstückig ineinander übergehenden Reflektoren,

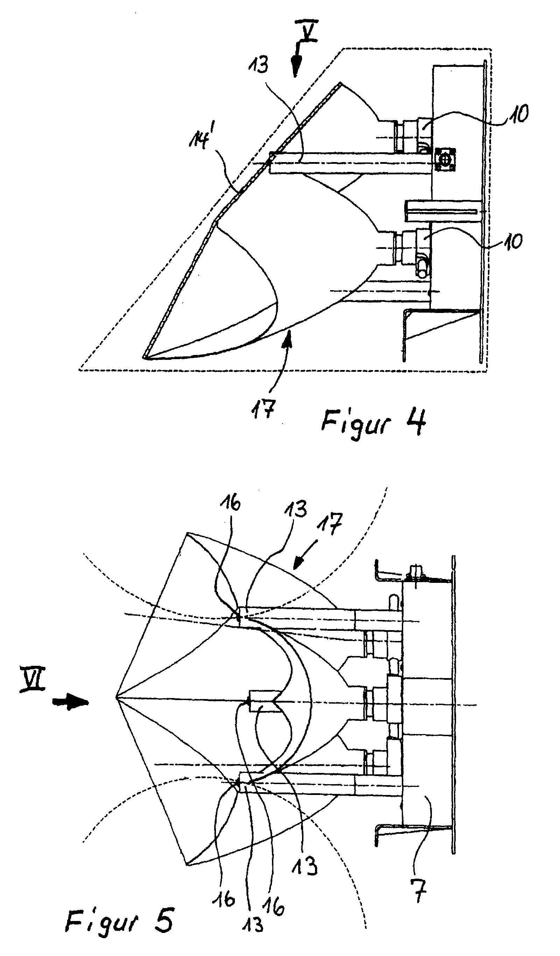

- Figur 4:: eine Seitenansicht des Scheinwerfers von Figur 3 aus Richtung IV mit gestrichelt angedeutetem Gehäuse
- Figur 5:: eine Vorderansicht des Scheinwerfers von Figur 4 aus Richtung V,

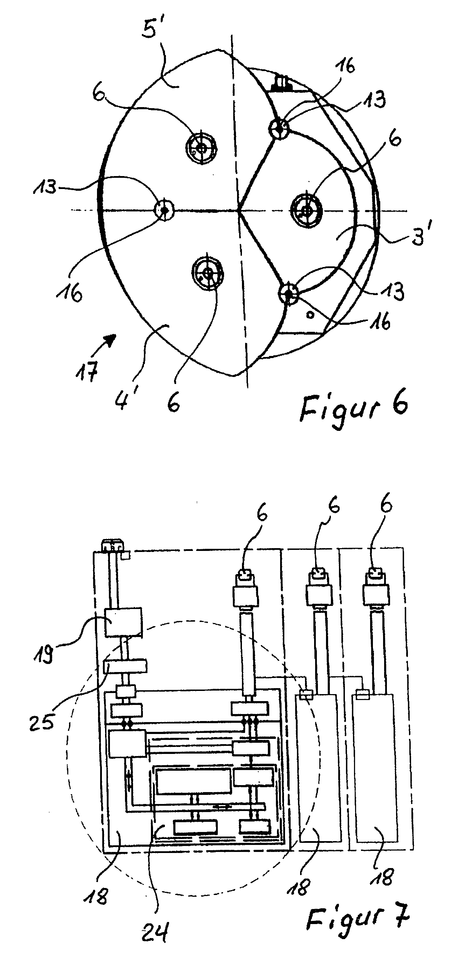

- Figur 6:: eine Draufsicht auf den Scheinwerfer von Figur 5 aus Richtung VI und
- Figur 7:: ein Schaltbild des elektronischen Versorgungsgerätes.

Ein Scheinwerfer für ein Flugzeug besteht im Wesentlichen aus einem Gehäuse 2, einem ersten Reflektor 3, einem zweiten Reflektor 4, einem dritten Reflektor 5, Gasentladungslampen 6 und einem elektronischen Versorgungsgerät 7.

Das Gehäuse 2 des Scheinwerfers 1 wird zur Außenhaut eines nicht dargestellten Flugzeugrumpfes hin von einer transparenten Abschlussscheibe 8 abgedeckt. Auf einem der Abschlussscheibe 8 abgewandten Geräteträger 9 sind die Reflektoren 3, 4, 5 angeordnet. Gegenüber einer horizontalen Ebene ist der erste Reflektor 3 um 1° und der zweite Reflektor 4 um 5° geneigt. Der dritte Reflektor 5 hat keine Neigung. Durch die unterschiedlichen Neigungen der Reflektoren 3, 4, 5 bzw. deren Mittelstrahlen 21, 22, 23 wird in jeder Anflugsituation eine optimale Vorfeldausleuchtung des Flugzeuges gewährleistet.

Den Reflektoren 3, 4, 5 ist jeweils eine Gasentladungslampe 6 zugeordnet, die von dem elektronischen Versorgungsgerät 7 über Anschlussstecker 10 elektrisch versorgt wird. Die Reflektoren 3, 4, 5 sind über Stege 11, 12, miteinander verbunden. Mit dem Gehäuse 2 sind die Reflektoren 3, 4, 5 über drei Dome 13 justierbar verbunden. Die Dome 13 sind in Hülsen gelagert, die nicht weiter dargestellte Druckfedern beinhalten um eine jeweilige Ausrichtung der Reflektorgruppe 3, 4, 5 bzw. des Scheinwerfers 1 im Flugzeugrumpf zu gewährleisten. Es ist beispielsweise eine Justierung von ± 2,5° um die x- und y- Achse möglich. Die Reflektoren 3, 4, 5 werden jeweils durch eine transparente Abdeckscheibe 14 abgedeckt. Die Abdeckscheibe 14 wird in dem Reflektor 3, 4, 5 elastisch fixiert und durch eine Halterahmen gesichert.

Die Gasentladungslampen 6, die beispielsweise als 50 W HID-Lampen ausgebildet sind, werden in einem Halsloch 15 der Reflektoren 3, 4, 5 positionsgenau zentriert und durch Halteflächen gesichert.

Um eine Gasentladungslampe 6 zu wechseln, sind an den Domen 13 angeordnete Schrauben 16 zu lösen und die Reflektoren 3, 4, 5 vom Geräteträger abzunehmen, der Anschlussstecker 10 der zu wechselnden Gasentladungslampe 6 zu lösen und das dazugehörende Halteblech zu entfernen. Die Montage erfolgt in umgekehrter Reihenfolge.

Nach einer anderen Ausführungsform der Erfindung sind die Reflektoren 3', 4', 5' ineinander übergehend zu einer Reflektoreinheit 17 verbunden. Die Reflektoren 3', 4', 5' sind dabei so angeordnet und ausgebildet, dass auf eine den Reflektoren 3', 4', 5' vorgelagerte lichtstreuende Optik verzichtet werden kann. Die Reflektoren 3', 4', 5' werden von einer optiklosen transparenten Abdeckscheibe 14' abgedeckt.

Das elektronische Versorgungsgerät 7 beinhaltet drei den Reflektoren 3, 3', 4, 4', 5, 5' zugeordnete Vorschaltgeräte 18 und einen Transformator 19, der die eingehende Bordspannung von 115 V AC auf 28 V DC herunterregelt. Die Start- und Betriebsspannung der Gasentladungslampen 6 wird in einem Kontrollteil 24 des Vorschaltgerätes 18 geregelt und überwacht. Zwischen den Transformator 19 und dem ersten Vorschaltgerät 18-ist ein EMC-Filter 25 zur Sicherstellung der elektromagnetischen Verträglichkeit vorgeschaltet.

## Patentansprüche

1. Scheinwerfer für ein Flugzeug, mit einer einem Gehäuse vorgelagerten Abschlussscheibe, mit einer einem Reflektor zugeordneten Gasentladungslampe und einem elektronischen Versorgungsgerät, **dadurch gekennzeichnet, dass** das Gehäuse (2) mindestens zwei Reflektoren (3, 3', 4, 4', 5, 5') aufweist, die zueinander unterschiedlich ausgerichtet sind und sich überlappende Lichtkegel erzeugen.

2. Scheinwerfer nach Anspruch 1, **dadurch gekennzeichnet, dass** das Gehäuse (2) drei Reflektoren (3, 3', 4, 4', 5, 5') aufweist, die sich überlappende Lichtkegel erzeugen.

3. Scheinwerfer nach Anspruch 1 oder 2, **dadurch gekennzeichnet, dass** die Reflektoren (3, 3', 4, 4', 5, 5') durch eine transparente Abdeckscheibe (14, 14') abgedeckt sind.

4. Scheinwerfer nach einem der Ansprüche 1 bis 3, **dadurch gekennzeichnet, dass** mindestens zwei Reflektoren (3, 3', 4, 4', 5, 5') miteinander verbunden und gemeinsam gegenüber dem Gehäuse (2) verstellbar sind.

5. Scheinwerfer nach einem der Ansprüche 2 bis 4, **dadurch gekennzeichnet, dass** drei Reflektoren (3, 3', 4, 4', 5, 5') miteinander verbunden und gemeinsam gegenüber dem Gehäuse (2) verstellbar sind.

6. Scheinwerfer nach Anspruch 5, **dadurch gekennzeichnet, dass** die Reflektoren über eine Drei-Punkt-Einstellung (20) verstellbar sind.

7. Scheinwerfer nach einem der Ansprüche 1 bis 6, **dadurch gekennzeichnet, dass** die Reflektoren (3, 4, 5) als separate Einzelreflektoren ausgebildet sind.

8. Scheinwerfer nach Anspruch 7, **dadurch gekennzeichnet, dass** den Reflektoren (3, 4, 5) ein lichtstreuende Optik vorgelagert ist.

9. Scheinwerfer nach einem der Ansprüche 1 bis 6, **dadurch gekennzeichnet, dass** die Reflektoren (3', 4', 5') einstückig ineinander übergehend zu einer Reflektoreinheit (17) verbunden sind.

10. Scheinwerfer nach einem der Ansprüche 1 bis 9, **dadurch gekennzeichnet, dass** das Versorgungsgerät (7) drei Vorschaltgeräte (18) und einen Transformator (19) zur Versorgung der Gasentladungslampen (6) aufweist.
